# EUROPÄISCHE PATENTSCHRIFT

(11) **EP 3 510 092 B1**
(45) Veröffentlichungstag und Bekanntmachung des Hinweises auf die Patenterteilung: **04.03.2020**
(21) Anmeldenummer: 18702444.3
(22) Anmeldetag: 23.01.2018
(51) Int. Cl.: C08K 5/098, C08K 3/013, C08K 3/08, C08L 23/02

(54) **KUNSTSTOFFZUSAMMENSETZUNG, HERSTELLUNGSVERFAHREN UND VERWENDUNG**
PLASTIC COMPOSITION, PRODUCTION METHOD, AND USE OF SAME
COMPOSITION DE MATIÈRE PLASTIQUE, SON PROCÉDÉ DE FABRICATION ET SON UTILISATION

(30) Priorität: 03.02.2017 DE 102017001013
(43) Veröffentlichungstag der Anmeldung: 17.07.2019
(73) Patentinhaber: ATP Aicher + Tröbs Produktentwicklung GmbH, 83317 Teisendorf (DE)
(72) Erfinder: TIMMROTH, René, 83404 Ainring (DE); AICHER, Helmut, 83364 Neukirchen (DE); TRÖBS, Stefan, 83317 Oberteisendorf (DE)
(74) Vertreter: Laufhütte, Dieter
(86) Internationale Anmeldenummer: PCT/EP2018/051589
(87) Internationale Veröffentlichungsnummer: WO 2018/141587

(56) Entgegenhaltungen:
- EP-A1- 0 661 341
- DE-A1- 19 859 194

## Beschreibung

Die Erfindung betrifft eine hochgefüllte Kunststoffzusammensetzung, ein Verfahren zur Herstellung der hochgefüllten Kunststoffzusammensetzung und die Verwendung einer derartigen hochgefüllten Kunststoffzusammensetzung.

Aus dem Stand der Technik ist die Verwendung von gefüllten Kunststoffzusammensetzungen zur Herstellung funktioneller Bauteile bekannt. Derartige Zusammensetzungen umfassen typischerweise eine Kunststoffmatrix und einen Füllstoff.

Zur Verbesserung mancher Eigenschaften derartiger funktioneller Bauteile ist ein hoher Füllstoffanteil wünschenswert. Beispielsweise kann ein steigender Füllstoffanteil zu einer Erhöhung bzw. stärkeren Ausprägung der Wärmeleitfähigkeit, der Dichte, der magnetischen Eigenschaften oder der Schirmwirkung gegen elektromagnetische Signale und ionisierende Strahlung führen. Insbesondere wenn der Füllstoffanteil nahe dem theoretischen Maximum liegt, kann eine starke Verbesserung mancher Eigenschaften beobachtet werden, denn in diesem Bereich steigt die Zahl der Partikelkontakte stark an. Von einer Nähe zum theoretischen Maximum kann dann gesprochen werden, wenn der Volumenanteil des Füllstoffes dem Volumenanteil der nativen Füllstoffpartikel bei maximaler Packungsdichte nahekommt. Der Volumenanteil der nativen Füllstoffpartikel bei maximaler Packungsdichte ergibt sich unmittelbar aus der Partikelgrößenverteilung.

Andererseits steigt mit zunehmendem Füllstoffanteil auch die Schmelzviskosität der Kunststoffzusammensetzungen, wodurch hochgefüllte derartige Zusammensetzungen nicht jeder Verarbeitungstechnik zugänglich sind. Während Press- und Vergussmassen zu Ungunsten der Designfreiheit teilweise hoch mit Füllstoff beladen werden können, sind hochgefüllte Kunststoffzusammensetzungen für eine Verarbeitung im Rahmen eines variableren Spritzgussverfahrens oder Extrusionsverfahrens oft nicht geeignet. Ferner werden einige mechanische Eigenschaften der Bauteile durch einen hohen Füllstoffanteil verschlechtert und die hochgefüllten Bauteile tendieren dazu, spröde zu sein.

Aufgabe der Erfindung ist, möglichst hochgefüllte Kunststoffzusammensetzungen bereitzustellen, die im Rahmen eines Spritzguss- oder Extrusionsverfahrens verarbeitet werden können und zudem akzeptable mechanische Eigenschaften aufweisen.

Vor diesem Hintergrund betrifft die Erfindung eine hochgefüllte Kunststoffzusammensetzung umfassend (a) wenigstens ein Polyolefin; (b) wenigstens ein metallisches Salz einer ungesättigten aliphatischen Fettsäure; (c1) wenigstens eine erste Mittlerverbindung, bei der es sich um eine Kohlenwasserstoffverbindung mit wenigstens einer cyclischen und vorzugsweise aromatischen Gruppe und mit wenigstens einem polaren Substituenten umfassend ein Sauerstoff- und/oder Stickstoffatom handelt, wobei die erste Mittlerverbindung wenigstens zwei und maximal zehn cyclische Gruppen pro polarem Substituenten umfasst, und wobei der Schmelzpunkt der ersten Mittlerverbindung nicht mehr als 80°C unterhalb und nicht mehr als 50°C oberhalb des Schmelzpunkts des Polyolefins (a) liegt; (c2) optional, wenigstens eine zweite Mittlerverbindung, die sich von der ersten Mittlerverbindung (c1) unterscheidet und bei der es sich um eine Kohlenwasserstoffverbindung mit wenigstens einer cyclischen und vorzugsweise aromatischen Gruppe und mit wenigstens einem polaren Substituenten umfassend ein Sauerstoff- und/oder Stickstoffatom handelt, wobei die zweite Mittlerverbindung weniger als zwei cyclische Gruppen pro polarem Substituenten und vorzugsweise wenigstens zwei und maximal zehn polare Substituenten pro cyclischer Gruppe umfasst, und wobei der Schmelzpunkt der zweiten Mittlerverbindung nicht mehr als 80°C unterhalb und nicht mehr als 50°C oberhalb des Schmelzpunkts des Polyolefins (a) liegt; (d) wenigstens eine dritte Mittlerverbindung, bei der es sich um eine Kohlenwasserstoffverbindung mit wenigstens einer cyclischen und vorzugsweise aromatischen Gruppe handelt, die unsubstituiert ist oder halogensubstituiert ist, wobei der Siedepunkt der dritten Mittlerverbindung nicht mehr als 100°C unterhalb und nicht mehr als 80°C oberhalb des Schmelzpunkts des Polyolefins (a) liegt; und (e) wenigstens einen partikulären Füllstoff.

Unter dem Siedepunkt ist der Siedepunkt bei Normaldruck zu verstehen.

Die gefüllte Zusammensetzung kann in granulierter Form vorliegen, um diese beispielsweise im Rahmen eines Extrusions- oder Spritzgussverfahrens verarbeiten zu können. Die Zusammensetzung kann ferner als solides Bauteil vorliegen, welches beispielsweise anhand eines Extrusions- oder Spritzgussverfahrens erhalten werden kann.

Der Füllstoffanteil der hochgefüllten Kunststoffzusammensetzung beträgt mehr als 40 Vol.-% gemessen am Gesamtvolumen der gefüllten Zusammensetzung. In einer bevorzugten Ausführungsform beträgt der Füllstoffanteil mehr als 50 Vol.-%. In einer weiter bevorzugten Ausführungsform kann der Füllstoffanteil mehr als 60 Vol.-% betragen.

In einer Ausführungsform weist der partikuläre Füllstoff (e) eine monomodale Verteilung der Partikelgrößen auf. In einer alternativen Ausführungsform weist der Füllstoff eine multimodale Verteilung der Partikelgrößen auf.

Die Erfindung umfasst den Gedanken, dass der Füllstoffanteil in der hochgefüllten Kunststoffzusammensetzung nahe dem theoretischen Maximum liegt, das sich aus der Partikelgrößenverteilung ergibt. Bei Füllstoffen mit einer monomodalen Verteilung der Partikelgrößen liegt das theoretische Maximum typischerweise niedriger (dort beispielsweise bei 65 Vol.-%) als bei Füllstoffen mit einer multimodalen Verteilung der Partikelgrößen (dort beispielsweise bei 75 Vol.-%). Es wurde erkannt, dass viele physikalische Eigenschaften hochgefüllter Kunststoffzusammensetzungen, beispielsweise deren Wärmeleitfähigkeit, weniger stark vom absoluten Füllstoffanteil abhängen als von der Nähe des Füllstoffanteils zum theoretischen Maximum. Dieser Effekt beruht vermutlich darauf, dass diese Effekte maßgeblich von der Anzahl der Teilchenkontakte des Füllstoffes beeinflusst werden und diese Anzahl nahe dem theoretischen Maximum stark zunimmt.

Es ist daher vorgesehen, dass der Füllstoffanteil in der Kunststoffzusammensetzung mindestens 80 Vol.-%, vorzugsweise mindestens 90 Vol.-% und weiter vorzugsweise mindestens 95 Vol.-% des theoretischen Maximums beträgt.

Die ungefüllte Kunststoffzusammensetzung kann unter dem Begriff "Organik" zusammengefasst werden. In hochgefüllten bzw. nahe der Packungsgrenze gefüllten erfindungsgemäßen Kunststoffzusammensetzungen wird vermutet, dass die erste Mittlerverbindung (c1) und ggf. ferner die zweite Mittlerverbindung (c2) während der Verarbeitung zu einer Erhöhung des Schmelzvolumens und einer Erniedrigung der Schmelzviskosität beiträgt, dass erste Mittlerverbindung (c1) und ggf. ferner die zweite Mittlerverbindung (c2) im fertigen Bauteil zu einer Erhöhung der Affinität bzw. Bindungsstärke zwischen Organik und Füllstoff beiträgt, dass die dritte Mittlerverbindung (d) während der Verarbeitung eine Gasphase ausbildet und so das Volumen der Organik weiter erhöht und die Viskosität weiter erniedrigt, und dass das Salz (b) zu einer Homogenisierung der Mischung beiträgt.

In einer Ausführungsform handelt es sich bei dem Füllstoff (e) um ein Metallpulver, ein Metalloxidpulver, ein Oxidkeramikpulver, ein Nichtoxidkeramikpulver oder ein Kohlenstoffpulver. Auch der Einsatz von Mischungen umfassend derartige Pulver ist denkbar und von der Erfindung umfasst.

Die Füllstoffpartikel haben vorzugsweise eine sphärische bzw. körnige Gestalt. In einer Ausführungsform liegt der durchschnittliche Korndurchmesser der Füllstoffe zwischen 1 µm und 150 µm, vorzugsweise zwischen 20 µm und 100 µm. Der durchschnittliche Komdurchmesser der Füllstoffe kann beispielsweise durch Siebanalyse gemäß DIN 66165 bestimmt werden.

In einer Ausführungsform liegt der Schmelzpunkt der ersten Mittlerverbindung (c1) nicht mehr als 50°C unterhalb und/oder nicht mehr als 30°C oberhalb des Schmelzpunkts des Polyolefins (a).

In einer Ausführungsform liegt der Schmelzpunkt der zweiten Mittlerverbindung (c2) nicht mehr als 50°C unterhalb und/oder nicht mehr als 30°C oberhalb des Schmelzpunkts des Polyolefins (a).

In einer Ausführungsform liegt der Siedepunkt der dritten Mittlerverbindung (d) nicht mehr als 70°C unterhalb und/oder nicht mehr als 50°C oberhalb des Schmelzpunkts des Polyolefins (a).

Die angegebenen allgemeinen und bevorzugten maximalen Siede- und Schmelzpunktunterschiede zwischen den Bestandteilen (a), (c1), (c2) und (d) haben den Hintergrund, dass einerseits das Polyolefin (a), die erste Mittlerverbindung (c1) und, sofern vorhanden, auch die zweite Mittlerverbindung (c2) während der Verarbeitung in geschmolzenem Zustand vorliegen sollen und die dritte Mittlerverbindung (d) während der Verarbeitung gasförmig vorliegen soll, und dass andererseits keiner der Stoffe sich zersetzen soll. Dass der Siedepunkt der dritten Mittlerverbindung (d) bei Normaldruck um bis zu 100°C unterhalb des Schmelzpunkts des Polyolefins (a) liegen kann, ist dadurch begründet, dass sich während der Verarbeitung ggf. lokale Drücke von mehreren Bar einstellen können, welche zu einer Siedepunkterhöhung führen.

In einer Ausführungsform weist das Polyolefin (a) eine durchschnittliche molare Masse von zwischen 10⁴ und 10⁶ g/mol auf. Beispielsweise kann die durchschnittliche molare Masse geeigneter Polyolefine (a) zwischen 50 000 und 500 000 g/mol liegen.

In einer Ausführungsform liegt der Schmelzpunkt des Polyolefins (a) bei zwischen 100°C und 250°C.

In einer Ausführungsform ist das Polyolefin (a) ein semikristallines Polymer mit einem Kristallinitätsgrad von weniger als 90%. Beispielsweise kann der Kristallinitätsgrad zwischen 30 und 80 % liegen.

In einer Ausführungsform ist die Polydispersität des Polyolefins (a) kleiner 5.

Geeignete Polyolefine (a) umfassen Polyethylen, Polypropylen, Polymethylpenten, Polyisopren, Polybutylen, Polyisobutylen sowie Copolymere und Mischungen daraus. Polyethylen ist besonders bevorzugt.

Die Polyolefine (a) können modifiziert sein, beispielsweise oxidiert, gegraftet oder silanisiert. Bevorzugt sind aber unsubstituierte Polyolefine ohne Heteroatome.

In einer Ausführungsform handelt es sich bei der Fettsäure des Salzes (b) um eine einwertige Carbonsäure mit mehr als 8 Kohlenstoffatomen und wenigstens einer Doppelbindung. Vorzugsweise weisen die Carbonsäuren weniger als 25 Kohlenstoffatome auf. Die bevorzugte Zahl an Doppelbindungen liegt zwischen 1 und 5. Beispielsweise kann die Zahl der Kohlenstoffatome zwischen 15 und 20 betragen. Die Zahl der Doppelbindungen kann beispielsweise 1 oder 2 betragen. Geeignete Carbonsäuren umfassen Ölsäure und Linolsäure. Bei dem Kation des Salzes kann es sich beispielsweise um ein Alkalimetall handeln, insbesondere um Natrium oder Kalium.

In einer Ausführungsform beträgt der Anteil des Salzes (b) in der ungefüllten Zusammensetzung, d.h. in der Organik, zwischen 1 und 15 Gew.-%. Bevorzugte Bereiche umfassen Anteile von mehr als 3 Gew.-% und von weniger als 7 Gew.-%. In einer Ausführungsform umfasst die erste Mittlerverbindung (c1) Hydroxy- und/oder Amino-Gruppen als polare Substituenten. In einer Ausführungsform handelt es sich bei allen polaren Substituenten der ersten Mittlerverbindung (c1) um Hydroxy- und/oder Amino-Gruppen, vorzugsweise um Hydroxy-Gruppen.

In einer Ausführungsform weist die erste Mittlerverbindung 1 bis 4 (c1) polare Substituenten und vorzugsweise Hydroxy-Gruppen auf.

In einer Ausführungsform handelt es sich bei der ersten Mittlerverbindung (c1) um einen polycyclischen aromatischen Alkohol.

Beispiele geeigneter erster Mittlerverbindungen (c1) umfassen Triphenylmethanol, Diphenylmethanol, 4-Nitrobenzenemethanol, Diphenylether, Triphenylsilanol, 4-Hydroxybiphenyl, 3-Hydroxybiphenyl, 2-Hydroxybiphenyl, α-Cyclohexyl-α-phenyl-1-piperidinepropanol, 4-Cyclohexylphenol, 2-Cyclohexylphenol und Dibenzylamine.

In einer Ausführungsform umfasst die zweite Mittlerverbindung (c2) Hydroxy- und/oder Amino-Gruppen als polare Substituenten. In einer Ausführungsform handelt es sich bei allen polaren Substituenten der zweiten Mittlerverbindung (c2) um Hydroxy- und/oder Amino-Gruppen, vorzugsweise um Hydroxy-Gruppen.

In einer Ausführungsform weist die zweite Mittlerverbindung (c2) 1 bis 4 polare Substituenten und vorzugsweise zwei polare Substituenten auf. In einer Ausführungsform umfasst die zweite Mittlerverbindung (c2) einen aromatischen 6-Ring mit zwei polaren Substituenten und vorzugsweise Hydroxy-Gruppen in para-Position.

In einer Ausführungsform handelt es sich bei der zweiten Mittlerverbindung (c2) um einen aromatischen Alkohol.

Beispiele geeigneter zweiter Mittlerverbindungen (c2) umfassen 4-(3-Hydroxy-1-propenyl)-2-methoxyphenol, 4-Hydroxybenzenemethanol, 4-Hydroxybenzeneethanol, 3-Hydroxybenzene-methanol, 2-Hydroxybenzenemethanol, 4-Hydroxybenzene-ethanol, 4-Benzylphenol, 2-Benzylphenol, 2-(Benzyloxy)ethanol, 4-(2-Aminopropyl)phenol, α-(1-Aminopropyl) benzenemethanol, α-Aminopropyl)-benzyl alcohol, o-Ethylphenol, m-Ethylphenol, p-Ethylphenol, 2,4-Xylenol, 2,5-Xylenol, 2,6-Xylenol, 3,4-Xylenol, 3,5-Xylenol, Benzeneethanol, α-Methylbenzyl alcohol, 3-Methylbenzenemethanol, 4-Methylbenzenemethanol, p-Methylaniline, 4-tert-Butyl-1,2-benzenediol, p-1-Acetyl-2,5-dihydroxybenzene, α-Allylbenzenemethanol, 4-Aminobenzeneethanol, 2-Aminobenzenemethanamine, 2-Aminobenzenemethanol, α-(1-Aminoethyl)benzenemethanol, 4-(2-Amino-1-hydroxyethyl)-1,2-benzenediol, α-(Aminomethyl)benzenemethanol, 2-Amino-4-methylphenol, 4-Amino-2-methylphenol, 4-Amino-3-methylphenol, 3-(Aminomethyl)-3,5,5-trimethylcyclohexanol, α-(Aminomethyl)benzenemethanol, α-(1-Aminopropyl)benzenemethanol, 1,2-Benzenedimethanol, 1,3-Benzenedimethanol, 1,4-Benzenedimethanol, Benzeneethanol, Benzenepentanol, Benzenepropanol, 1,2,3-Benzenetriol, 1,2,4-Benzenetriol, 1,3,5-Benzenetriol, p-Benzidine, 1,1-Bis(4-chlorophenyl)ethanol, 2,5-Bis(1,1-dimethylpropyl)-1,4-benzenediol, 1-Butoxy-4-methylbenzene, 2-tert-Butyl-4,6-dimethylphenol, 4-tert-Butyl-2,5-dimethylphenol, 4-tert-Butyl-2,6-dimethylphenol, 1-tert-Butyl-3,5-dimethyl-2,4,6-trinitrobenzene, 2-tert-Butyl-4,6-dinitrophenol, 1-tert-Butyl-3,5-dimethyl-2,4,6-trinitrobenzene, 2-tert-Butyl-4,6-dinitrophenol, 4-tert-Butyl-1,2-benzenediol, 2-tert-Butyl-1,4-benzenediol, 2-tert-Butyl-4,6-dimethylphenol, 4-tert-Butyl-2,5-dimethylphenol, 4-tert-Butyl-2,6-dimethylphenol, 2-tert-Butyl-4-methoxyphenol, 3-tert-Butyl-4-methoxyphenol, N,N-Diethyl-2-methylaniline, 2,6-Diisopropylaniline, 3,4-Dimethoxybenzenemethanol, 2,5-Dimethyl-1,3-benzenediol, 2,6-Dimethyl-1,4-benzenediol, 4-Dimethylbenzenemethanol, 1-(4-Methylphenyl)ethanol, α,α-Dimethylbenzenemethanol, α,α-Cumylalcohol, α,α-Dimethylbenzenepropanol, 2-(1,1-Dimethylpropyl)phenol, 4-(1,1-Dimethylpropyl)phenol, 2-(Hydroxymethyl)-1,4-benzenediol, 2-Isopropylphenol, 3-Isopropylphenol, 4-Isopropylphenol, 4-Methoxy-α-methylbenzenemethanol, 2-Methylaniline, 3-Methylaniline, 4-Methylaniline, N-Methylaniline, 3-Methyl-1,2-benzenediol, 4-Methyl-1,2-benzenediol, 2-Methyl-1,3-benzenediol, 4-Methyl-1,3-benzenediol, 5-Methyl-1,3-benzenediol, 2-Methyl-1,4-benzenediol, α-Methylbenzenemethanol, 2-Methylbenzenemethanol, 2-Methyl-1,3-benzenediol, 4-Methyl-1,3-benzenediol, 5-Methyl-1,3-benzenediol, 2-Methyl-1,4-benzenediol, 2-Methylbenzeneethanol, 4-Methylbenzeneethanol, 2-Methylbenzenemethanamine, 3-Methylbenzenemethan-amine, 4-Methylbenzenemethanamine, N-Methylbenzenemethanamine, α-Methylbenzenemethanol, 2-Methylbenzenemethanol, 3-Methylbenzenemethanol, 4-Methylbenzenemethanol, 3-Methylbenzenemethanol, 4-Methylbenzenemethanol, α-Methylbenzenepropanol, α-ethylcyclohexanemethanol, 4-Methylcyclohexanemethanol, 1-Methylcyclohexanol, cis-2-Methylcyclohexanol, trans-2-Methylcyclohexanol, cis-3-Methylcyclohexanol, trans-3-Methylcyclohexanol, cis-4-Methylcyclohexanol, trans-4-Methylcyclohexanol, cis-2-Methylcyclohexanol, trans-2-Methylcyclohexanol, cis-3-Methylcyclohexanol, trans-3-Methylcyclohexanol, cis-4-Methylcyclohexanol, trans-4-Methylcyclohexanol, 1-Methyl-4-isopropylcyclohexanol, 5-Methyl-2-isopropylcyclohexanol, 5-Methyl-2-isopropylcyclohexanol, 5-Methyl-2-isopropylcyclohexanol, 5-Methyl-2-isopropyl-cyclohexanol, 5-Methyl-2-isopropylcyclohexanol, 2-(Methylphenylamino)ethanol, 2-[(2-Methylphenyl)amino]ethanol, 4-Methyl-α-phenylbenzenemethanol, α-Methyl- α-phenylbenzenemethanol, 2-(Methylphenylamino)ethanol, 2-[(2-Methylphenyl)amino]ethanol, 4-Methyl-a-phenylbenzenemethänol, α-Methyl-α-phenylbenzenemethanol, 3-Pentadecylphenol, trans-5-(2-Phenylvinyl)-1,3-benzenediol, 2,3,5,6-Tetramethyl-1,4-benzenediol, 2,3,5-Trimethyl-1,4-benzenediol, 2,3,3-Trimethyl-2-butanol, cis-3,3,5-Trimethylcyclo-hexanol, trans-3,3,5-Trimethylcyclohexanol, 2,3,4-Trimethylphenol, 2,3,5-Trimethylphenol, 2,3,6-Trimethylphenol, 2,4,5-Trimethylphenol, 2,4,6-Trimethylphenol und 3,4,5-Trimethylphenol.

In einer Ausführungsform beträgt der Anteil der ersten Mittlerverbindung (c1) in der ungefüllten Zusammensetzung, d.h. in der Organik, zwischen 5 und 30 Gew.-%. Bevorzugte Bereiche umfassen Anteile von mehr als 8 Gew.-% und von weniger als 20 Gew.-%.

In einer Ausführungsform beträgt der Anteil der zweiten Mittlerverbindung (c2) in der ungefüllten Zusammensetzung, d.h. in der Organik, zwischen 1 und 20 Gew.-%. Bevorzugte Bereiche umfassen Anteile von mehr als 2 Gew.-% und von weniger als 10 Gew.-%.

In einer Ausführungsform handelt es sich bei der dritten Mittlerverbindung (d) um eine Kohlenwasserstoffverbindung mit wenigstens einer cyclischen und vorzugsweise aromatischen Gruppe, die wenigstens eine Chlorsubstitution aufweist.

Der Anteil der dritten Mittlerverbindung (d) in der ungefüllten Zusammensetzung, d.h. in der Organik, kann zwischen 3 und 20 Gew.-% betragen. Bevorzugte Volumenanteile der dritten Mittlerverbindung (d) umfassen Anteile von mehr als 5 Gew.-% und von weniger als 15 Gew.-%.

In einer Ausführungsform handelt es sich bei der dritten Mittlerverbindung (d) um einen aromatischen unsubstituierten Kohlenwasserstoff.

Beispiele geeigneter dritter Mittlerverbindungen (d) umfassen Benzene, Dimethylbenzene, 1,3,5-Trimethylbenzene, 1,2,4-Trimethylbenzene, 1,2,3-Trimethylbenzene, p-Ethyltoluene, m-Ethyltoluene, o-Ethyltoluene, Isopropylbenzene, Propylbenzene, p-Xylene, m-Xylene, o-Xylene, Ethylbenzene, 1,3,5-Tri-tert-butylbenzene, (Trichloromethyl)benzene, p-Dichlorobenzene, Hexamethylbenzene, Hexylbenzene, 1,2,4,5-Tetramethylbenzene, 1,2,3,4-Tetramethylbenzene, 1,2,3,5-Tetramethylbenzene, o-Ethyltoluene, p-Ethyltoluene, 1,2,3-Trimethylbenzene, 1,2,4-Trimethylbenzene, 1,3,5-Trimethylbenzene, Propylbenzene, Isopropylbenzene, o-Ethyltoluene, p-Ethyltoluene, Ethylbenzene, o-Xylene, m-Xylene, p-Xylene, Cyclohexane, Methylcyclopentane, Trimethylbenzene, Isopropenylbenzene, m-Diethylbenzene, p-Diethylbenzene, sec-Butylbenzene, tert-Butylbenzene, Isobutylbenzene, Isopropylbenzene, o-Ethyltoluene, m-Ethyltoluene, p-Ethyltoluene, 1,2,3-Trimethylbenzene, 1,2,4-Trimethylbenzene, 1,3,5-Trimethylbenzene, Allylbenzene, (trans)-1,3-Butadienylbenzene, 1-tert-Butyl-3,5-dimethylbenzene, Butylbenzene, sec-Butylbenzene, tert-Butylbenzene, 1-tert-Butyl-2-methylbenzene, 1-tert-Butyl-3-methylbenzene, 1-tert-Butyl-4-methylbenzene, 1-tert-Butyl-4-ethylbenzene, 1-tert-Butyl-2-methyl-benzene, 1-tert-Butyl-3-methylbenzene, 1-tert-Butyl-4-methylbenzene, Cyclopentylbenzene, Cyclopropylbenzene, Decylbenzene, 1,2-Diethylbenzene, 1,3-Diethylbenzene, 1,4-Diethylbenzene, 1,2-Diisopropylbenzene, 1,3-Diisopropylbenzene, 1,4-Diisopropylbenzene, 1-Ethyl-2,4-dimethylbenzene, 1-Ethyl-3,5-dimethylbenzene, 2-Ethyl-1,3-dimethylbenzene, 1-Isopropyl-2-methylbenzene, 1-Isopropyl-3-methylbenzene, 1-Isopropyl-4-methylbenzene, 1-Methyl-3-propylbenzene, 1-Methyl-4-propylbenzene, cis-1-Propenylbenzene, cis-1-Propenylbenzene, trans-1-Propenylbenzene, 1,2,3,4-Tetramethylbenzene, 1,2,3,5-Tetramethylbenzene, 1,2,4,5-Tetramethylbenzene, 1,2,3-Trimethylbenzene, 1,2,4-Trimethylbenzene, 1,3,5-Trimethylbenzene, 1,2,3,4-Tetrahydronaphtalin und Bicyclo[4.4.0]decan.

Der Gewichtsanteil des Polyolefins (a) in der Organik ergibt sich aus der Differenz zwischen der Summe der Anteile der weiteren Additive und 100 Gew.-%.

Weitere geeignete Additive umfassen Fettsäureester. Fettsäureester können beispielsweise einen Einfluss auf die Schmelzviskositätsabsenkung der Kunststoffzusammensetzung nehmen und/oder können zur Vorbehandlung des Füllstoffes (e) dienen. Weitere geeignete Additive umfassen Alkylsilane. Weitere geeignete Additive umfassen organische Titanate, organische Phosphonate und organische Phosphate. Jedes dieser Additive kann beispielsweise in einer Menge von zwischen 0,1 und 5 Vol.-% in der Zusammensetzung vorliegen.

Vor dem eingangs genannten Hintergrund betrifft die Erfindung ferner ein Verfahren zur Herstellung einer erfindungsgemäßen gefüllten Kunststoffzusammensetzung mit den Schritten A Suspendieren des Füllstoffes (e) in einem Lösungsmittel; B Einmischen des Salzes (b), der ersten Mittlerverbindung (c1) und ggf. der zweiten Mittlerverbindung (c2) in die Suspension; C Trocknen der Suspension zur Entfernung des Lösungsmittels; D Vermischen des Rückstandes mit dem Polyolefin (a); und E Hinzufügen der dritten Mittlerverbindung (d).

In der so hergestellten Zusammensetzung sind das Salz (b), die erste Mittlerverbindung (c1) und ggf. die zweite Mittlerverbindung (c2) nicht nur einfach in der Mischung vorhanden, sondern haften durch die vorhergehende Oberflächenbehandlung des Füllstoffes an diesem an.

An das Einmischen gemäß Schritt B kann sich vor der Trocknung gemäß Schritt C eine Einwirkphase anschließen. Die Dauer dieser Phase kann beispielsweise zwischen 10 Minuten und 2 Stunden betragen. Als Temperatur kann Raumtemperatur oder auch eine erhöhte Temperatur gewählt werden. Während der Einwirkphase kann eine Agitation der Suspension beispielsweise durch Rühren erfolgen. Alternativ kann vorgesehen sein, dass die Suspension während der Einwirkphase still steht.

Das Vermischen gemäß Schritt D kann im trockenen Zustand erfolgen, wobei der pulverförmige, ggf. zuvor gemahlene Rückstand aus Schritt C mit pulverförmigem oder granulatförmigem Polyolefin (a) vermischt wird. Ferner ist ein Vermischen im schmelzflüssigen Zustand des Polyolefins (a) denkbar.

In einer Ausführungsform folgen auf das Vermischen gemäß Schritt D eine Compoundierung im schmelzflüssigen Zustand, eine Abkühlung und eine Zerkleinerung.

Die Hinzufügung der dritten Mittlerverbindung (d) gemäß Schritt E kann durch Besprühen der zerkleinerten trockenen Mischung mit der dritten Mittlerverbindung (d) erfolgen.

### Geeignete Lösungsmittel umfassen schwach polare bis apolare Lösungsmittel. Beispiele umfassen

Geeignete Lösungsmittel umfassen polare Lösungsmittel, beispielsweise aprotische polare Lösungsmittel wie Aceton oder protische polare Lösungsmittel wie Ethanol.

Letztlich betrifft die Erfindung vor dem eingangs genannten Hintergrund die Verwendung einer erfindungsgemäßen hochgefüllten Kunststoffzusammensetzung zur Herstellung eines Formteils im Rahmen eines Extrusions- oder Spritzgussverfahrens.

Die vorliegende Erfindung schafft die Möglichkeit, in verarbeitungstechnisch und mechanisch sinnvoller Weise einen Volumenfüllgrad des Füllstoffes im Polyolefin zu erreichen, der sehr nahe an der theoretisch maximalen Packungsdichte der nativen Füllstoffpulverpartikel liegt. So können bestimmte physikalische Eigenschaften des Füllstoffes, wie z.B. magnetische Eigenschaften oder Wärmeleitfähigkeit sehr stark in der Kunststoffzusammensetzung zu tragen kommen, sodass neue Bereiche z.B. im Metallersatz erschlossen werden können.

Nachfolgend werden weitere Einzelheiten und Vorteile der Erfindung unter Bezugnahme auf den Stand der Technik, die gestellten Anforderungen und die vermutete Art des Zusammenwirkens der Füllstoffpartikel und der Matrix erklärt. Hierbei ist anzumerken, dass diese Ausführungen erklärende und keine einschränkende Bedeutung, beispielsweise auf das notwendige Vorhandensein eines bestimmten Stoffes haben.

Die erfindungsgemäßen Zusammensetzungen können in einer Ausführungsform als thermoplastische, organisch modifizierte Kunststoffzusammensetzung für die Herstellung hochgepackter plastifizierbarer kunststoffgebundener Pulver / Fasern / Carbon-Nanotubes, Whisker bzw. hochgefüllter thermoplastischer Kunststoffe als Material für Spritzguss, Extrusion und ähnliche Verfahren angesehen werden. Einsatzbereiche umfassen Kunststoffe mit verbesserten physikalischen Eigenschaften wie z. B. Wärmeleitung, magnetische Erscheinungen, hohe Dichte, Abschwächung von ionisierender Strahlung, Abschirmung gegen Hochfrequenz und Abrasionswirkung sowie Feedstocks für MIM- und CIM- Verfahren sowie 3D-Druckverfahren.

Derartige Materialien müssen abhängig vom Einsatzbereich unterschiedlichen Anforderungsprofilen genügen. Beispiele umfassen die nachfolgend genannten. Ein modifiziertes Polymersystem für diese Anwendung muss im fertigen Bauteil folgenden Anforderungen gerecht werden. Es verleiht dem Werkstoff seine mechanischen Eigenschaften wie Zugfestigkeit, E-Modul, Zähigkeit, Temperaturbeständigkeit, Härte und Abrasionsbeständigkeit. Diese Anforderungen gelten sowohl für das Polymer an sich als auch für die Anbindung an den pulver-/faserförmigen Füllstoff. Es muss gegen gegenüber den Umwelt-, Prozess- und Einsatzbedingungen chemisch beständig sein. Es muss sowohl während der Compoundierung des Werkstoffes und als auch während der Bauteilherstellung den gesamten Werkstoff auch bei höchster Packung bzw. hohen Füllgraden ausreichend plastifizieren und eine für Kunststoffspritzguss typische komplexe Formgebung ermöglichen. Es muss ebenso auf der haftungs-/bindungsassoziierten Füllstoff - Oberfläche eine Schicht erzeugt werden, die ausgezeichnete Schmiereigenschaften hat und höchsten Drücken standhält. Es muss eine sehr geringe Schmelzviskosität aufweisen, die wesentlich geringer ist als die des nativen Polymers. Es muss in der Lage sein, den Unterschied in der Packungsdichte zwischen dem in Fließbewegung befindlichen und in dichtester Packung ruhenden Füllstoff durch temporären Volumenzuwachs auszugleichen. Das Erstarrungs- und Kristallisationsverhalten darf keine zu hohen inneren Spannungen im Bauteil erzeugen, Trotz starker Anbindung an die Füllstoffpartikel in der Wärme unter Plastifizierungsbedingungen muss eine leichte Entformbarkeit aus dem Werkzeug unter Erstarrungsbedingungen gewährleistet sein.

Im Stand der Technik wird derzeit wird in den o.g. Einsatzbereichen bei keinem Werkstoff die theoretisch maximal erreichbare Packungsdichte des Pulvers auch nur annähernd erreicht. Die verwendeten Polymerzubereitungen auf Basis von Polyolefinen ermöglichen bei globulären monomodalen Pulvern bestenfalls Gehalte, die um ≥ 10 Vol.-% unter den nach der Formel von LEE für Partikelgrößenverteilungen errechenbaren Werten von ca. 65 Vol.-% Packungsdichte bei monomodalen Pulvern d90 < 45 µm liegen. Bei irregulären wie z.B. spratzigen oder plättchenförmigen Morphologien sind die Werte noch weiter entfernt. Bereits ab > 55 Vol.-% Pulveranteil kommt es bei o. g. Pulvern im Allgemeinen sowohl zu einer signifikanten Verschlechterung der Fließeigenschaften bei der Verarbeitung im Spritzguss als auch im Besonderen der mechanischen Eigenschaften, da die Bindung des Polymers an die Pulveroberfläche nicht hinreichend stark ist. Deshalb liegt zurzeit die Grenze für Wolfram-Abschirmmaterialien mit Dichte ca. 11 g/cm³ bei der Abschirmleistung von Blei (14 g/cm3 mit einer Abschirmleistung > 50% über Blei sollten möglich sein) oder die Wärmeleitung eines isotropen Wärmeleitkunststoffes bei 2-3 W/mK (bei Erreichen der theor. Packungsdichte sollten nach Lewis & Nielsen 10-15 W/mK möglich sein). Das gleiche Missverhältnis gibt es auch bei permanent- und weichmagnetischen Werkstoffen, deren mechanische Festigkeiten zudem stark abfallen. Bei den exemplarisch genannten Beispielen der bisher erreichten und erfindungsgemäß erreichbaren Dichte beträgt der Volumenfüllgradzuwachs ca. 9 Vol.-%, das absolute Volumen des Füllstoffes im gleichbleibenden Kunststoffvolumen erhöht sich jedoch um nahe 50%. Etwas bessere Werte erreichen Kunstharze für Press- und Gießmassen und neuerdings kettenverkürzte Polyolefine.

Gemäß der vorliegenden Erfindung werden Polyolefine verwendet. An hochgefüllten Zusammensetzungen auf Basis von Polyolefinen besteht ein großes kommerzielles Interesse. Bei den ausgewählten Füllstoffen wurden vor allem polare Materialien wie Metall und Metalloxidpulver sowie Oxidkeramikpulver und ggf. Nichtoxidkeramikpulver berücksichtigt, aber gerade für die apolaren Polyolefine sind auch apolare Füllstoffe wie Graphit, Graphen oder Kohlenstoff-Nanofasern von Interesse. Für hochgefüllte thermoplastische Kunststoffe wurde ein modulares System an ausgewählten organischen Additiven zur Modifizierung des Basispolymers entwickelt. Dies ermöglicht die Herstellung hochgepackter plastifizierbarer kunststoffgebundener Pulver bzw. hochgefüllter thermoplastischer Kunststoffe als Material für Spritzguss, Extrusion und ähnliche Verfahren. Das modulare System ermöglicht die gezielte Beeinflussung singulärer und multipler Eigenschaften des modifizierten Kunststoffes sowohl während der Bauteilherstellung als auch im fertigen Bauteil. Damit grenzt sich diese Erfindung von den Entwicklungen letzter Arbeiten ab, welche versucht haben, die Viskosität der gefüllten Kunststoffe durch die Verwendung multimodaler Pulvermischungen zu erniedrigen. Da sich die Fließverbesserungen dabei nur durch Erhöhung der Packungsdichte erzielen lassen, verschlechtern sich die physikalischen Eigenschaften, da der Volumenfüllgrad nicht in demselben Maße mit erhöht werden kann, da es der Polymerschmelze an Benetzungskapazität und Schmierfilmvolumen fehlt.

Es können die Eigenschaften Haftung/Bindung, Viskosität, Volumen, Festigkeit, Schlagzähigkeit, Gleiten, Entformen modular eingestellt werden, wobei diese nicht nur singulär sondern auch multipel und teilweise synergistisch kombiniert werden. Für die Realisierung hoher Packungen mit einer hinreichend vollständigen und gleichzeitig beweglichen Benetzung genügt die Schmelzviskosität polarer Polymere nicht mehr. Diese muss stark herabgesetzt werden, ohne permanenten Verlust der Molekülstruktur und ohne Abnahme der Haftungs-/Bindungskraft an hydrophilen Oberflächen. Im Sinne dieser Erfindung erfolgt dies zunächst durch partielle Substitution der hochviskosen Polymerschmelzviskosität mit niedrigviskoser Lösemittelviskosität und Salzschmelzviskosität geeigneter protischer Lösemittel und organischer Salze, die bezüglich ihrer Siede- und Schmelzpunkte thermodynamisch kompatibel zu den Polymerschmelzen sind. Die erhaltene Viskosität ist wesentlich geringer. Damit steigt die Benetzungskapazität eines gegebenen Schmelzvolumens stark an. Um die Benetzungskapazität weiterhin zu steigern und das Schmierfilmvolumen zu erhöhen, wird darüber hinaus gleichzeitig das Schmelzvolumens temporär stark erhöht, wobei primär das Schmelzvolumen der flüssigen Phase erhöht wird, dessen Volumenzuwachs Voraussetzung für das zusätzliche Einbringen eines sekundären definierten Gasvolumens ist, welches das primär erzeugte Flüssigvolumen um den Gasvolumenanteil zusätzlich aufbläht.

Auf die genaue Funktionsweise des Lösens der Polymere wird hier nicht tiefer eingegangen, da sie im Grunde bekannt ist und hier nur in neuartiger Art und Weise ausgenutzt wird. Im Besonderen wird die stärkere Polarität der Additive in geeigneter Lösung dazu ausgenutzt, über den stark viskositätserniedrigenden Effekt hinaus, durch die diffusionsgesteuerte Erniedrigung der Kohäsionskraft des Polymeres eine Erhöhung der Adhäsionskraft zum polaren Füllstoff zu erhalten. Die Polyolefinschmelze erfordert erste und fallweise auch zweite Mittlerverbindungen wie oben definiert, deren Schmelzpunkte in der Nähe derer Schmelztemperatur liegt. Durch hohe Volumenanteile dieser Alkohole im Polymer kann das Schmelzvolumen des Polymers stark erhöht werden.

Die erste Mittlerverbindung wirkt zudem als Weichmacher für die Polyolefine und verbessern dank ihrer amphiphilen Eigenschaften die Haftung zwischen polaren Füllstoffen und der apolaren oder schwach polaren Matrix und mithin die Einlagerung von Füllstoffpartikel durch Förderung der Penetration der Polymerketten innerhalb des Partikelgerüstes des Füllstoffes. Die zweite Mittlerverbindung, sofern zugesetzt, kann weiterhin amphiphile Wirkungen zeigen, denn er ist polarer als die erste Mittlerverbindung und kann die Haftung an polaren Füllstoffpartikeln verbessern. Vorzugsweise sollten die polaren Substituenten aber so ausgerichtet sein, dass sie keine intramolekulare Assoziationen eingehen. Ein im flüssigen Zustand zugesetzter geringerer Volumenanteil einer unter Schmelzbedingungen aber gasförmigen dritten Mittlerverbindung führt zu einer weiteren Volumenvergrößerung. Die Lösemittel haben zudem einen neu erkannten Effekt auf die Schlagzähigkeit. Die weichmachende Wirkung der kondensierten Lösemittelphase im erstarrten Polymer wirkt ähnlich wie ein Elastomer. Durch den Zusatz der Fettsäuresalze wird die Mischbarkeit und Homogenisierung der Polyolefinschmelze mit der Alkoholschmelze verbessert. Zudem wirken die Salze bei hohen Temperaturen als Gleitmittel und bei niederen Temperaturen als Entformungsmittel. Weiterhin wirken sie festigkeitsfördernd auf Kristallisation.

Weitere Einzelheiten und Vorteile der Erfindung ergeben sich aus dem nachfolgend beschriebenen Ausführungsbeispiel.

### Ausführungsbeispiel:

In einem geeigneten Gefäß werden 34,1 Volumensteile Aluminiumpulver in 41,8 Volumensteilen Aceton gegeben und gut gerührt. Als Aluminiumpulver wird eines mit folgender Korngrößenklassifizierung verwendet: d5 < 10 µm, d10 < 15 µm, d20 < 20 µm, d50 < 25 µm, d70 < 30 µm, d80 < 35 µm, d100 < 145 µm. Zu dieser Suspension werden 1,1 Volumensteile Natriumoleat, 3,3 Volumensteile Triphenylmethanol und 1,1 Volumensteile 4-Hydroxybenzenemethanol gegeben, gerührt und 30 min bei Raumtemperatur belassen.

Anschließend wird die Suspension getrocknet.

Die getrocknete Mischung wird anschließend mit 15,4 Volumensteilen HD-Polyethylen verrührt. Das HD-Polyethylen hat einen Kristallinitätsgrad von <90 % und eine mittlere Molmasse von <150 000 g/mol. Auf diese Pulvermischung werden 3,2 Volumensteile Dimethylbenzene gesprüht. Die gesamte Mischung wird in einem einfachen Mischer homogen verrührt.

Die erhaltene pulverförmige Zusammensetzung wird in einem Sigmakneter compoundiert und in einer Mühle spritzgießfertig granuliert.

Im Resultat wird eine thermoplastisch spritzgießbare Zusammensetzung aus HD-Polyethylen und Aluminiumpulver mit einem Füllstoffanteil von 62 Vol.-% erhalten. Der theoretisch maximale Füllstoffanteil bei Verwendung des genannten Pulvers betrüge 65 Vol.-%.

Zum Testen der aus dieser Zusammensetzung erhältlichen Formteile wird eine zylindrische Scheibe nach DIN spritzgegossen und einer Wärmeleitfähigkeitsmessung nach der Hotdisk-Methode (ISO 22007-2 bei Normaldruck und 21°C) am Gerät Linseis THB-100 unterzogen. Die gemessene (aufgrund des isometrischen Füllstoffes isotrope) Wärmeleitfähigkeit betrug 8 W/mK.

Ausgewählte mechanische Eigenschaften (Bruchdehnung, Festigkeit, Härte) waren bei qualitativem Vergleich für das Ausführungsbeispiel mit anderen am Markt bekannten hochgefüllten Materialien signifikant besser. Die hohe Füllung und die gute Wärmeleitfähigkeit gehen also weniger zu Lasten dieser mechanischen Eigenschaften als bei bekannten Materialien.

## Patentansprüche

1. Hochgefüllte Kunststoffzusammensetzung umfassend:
(a) wenigstens ein Polyolefin;
(b) wenigstens ein metallisches Salz einer ungesättigten aliphatischen Fettsäure;
(c1) wenigstens eine erste Mittlerverbindung, bei der es sich um eine Kohlenwasserstoffverbindung mit wenigstens einer cyclischen und vorzugsweise aromatischen Gruppe und mit wenigstens einem polaren Substituenten umfassend ein Sauerstoff- und/oder Stickstoffatom handelt, wobei die erste Mittlerverbindung wenigstens zwei und maximal zehn cyclische Gruppen pro polarem Substituenten umfasst, und wobei der Schmelzpunkt der ersten Mittlerverbindung nicht mehr als 80°C unterhalb und nicht mehr als 50°C oberhalb des Schmelzpunkts des Polyolefins (a) liegt;
(c2) optional, wenigstens eine zweite Mittlerverbindung, die sich von der ersten Mittlerverbindung (c1) unterscheidet und bei der es sich um eine Kohlenwasserstoffverbindung mit wenigstens einer cyclischen und vorzugsweise aromatischen Gruppe und mit wenigstens einem polaren Substituenten umfassend ein Sauerstoff und/oder Stickstoffatom handelt, wobei die zweite Mittlerverbindung weniger als zwei cyclische Gruppen pro polarem Substituenten und vorzugsweise wenigstens zwei und maximal zehn polare Substituenten pro cyclischer Gruppe umfasst, und wobei der Schmelzpunkt der zweiten Mittlerverbindung nicht mehr als 80°C unterhalb und nicht mehr als 50°C oberhalb des Schmelzpunkts des Polyolefins (a) liegt; und
(d) wenigstens eine dritte Mittlerverbindung, bei der es sich um eine Kohlenwasserstoffverbindung mit wenigstens einer cyclischen und vorzugsweise aromatischen Gruppe handelt, die unsubstituiert ist oder halogensubstituiert ist, wobei der Siedepunkt der dritten Mittlerverbindung nicht mehr als 100°C unterhalb und nicht mehr als 80°C oberhalb des Schmelzpunkts des Polyolefins (a) liegt; und
(e) wenigstens einen partikulären Füllstoff;
wobei der Anteil des Füllstoffs (e) mehr als 40 Vol.-% gemessen am Gesamtvolumen der gefüllten Zusammensetzung und/oder mehr als 80 Vol.-% des theoretischen Maximums beträgt.

2. Hochgefüllte Kunststoffzusammensetzung nach Anspruch 1, **dadurch gekennzeichnet, dass** der Schmelzpunkt der ersten Mittlerverbindung (c1) und/oder der Schmelzpunkt der zweiten Mittlerverbindung (c2) nicht mehr als 50°C unterhalb und/oder nicht mehr als 30°C oberhalb des Schmelzpunkts des Polyolefins (a) liegt; und/oder dass der Siedepunkt der dritten Mittlerverbindung (d) nicht mehr als 70°C unterhalb und/oder nicht mehr als 50°C oberhalb des Schmelzpunkts des Polyolefins (a) liegt.

3. Hochgefüllte Kunststoffzusammensetzung nach einem der vorhergehenden Ansprüche, **dadurch gekennzeichnet, dass** es sich bei dem Füllstoff (e) um ein Metallpulver, ein Metalloxidpulver, ein Oxidkeramikpulver, ein Nichtoxidkeramikpulver, ein Köhlenstoffpulver oder eine Kombination daraus handelt oder dass der Füllstoff (e) ein Metallpulver, ein Metalloxidpulver, ein Oxidkeramikpulver, ein Nichtoxidkeramikpulver, ein Kohlenstoffpulver oder eine Kombination daraus umfasst.

4. Hochgefüllte Kunststoffzusammensetzung nach einem der vorhergehenden Ansprüche, **dadurch gekennzeichnet, dass** der durchschnittliche Korndurchmesser der Füllstoffe zwischen 1 µm und 150 µm liegt.

5. Hochgefüllte Kunststoffzusammensetzung nach einem der vorhergehenden Ansprüche, **dadurch gekennzeichnet, dass** das Polyolefin (a) eine durchschnittliche molare Masse von zwischen 10⁴ und 10⁶ g/mol aufweist und/oder dass der Schmelzpunkt des Polyolefins (a) bei zwischen 100°C und 250°C liegt.

6. Hochgefüllte Kunststoffzusammensetzung nach einem der vorhergehenden Ansprüche, **dadurch gekennzeichnet, dass** es sich bei der Fettsäure des Salzes (b) um eine einwertige Carbonsäure mit mehr als 8 Kohlenstoffatomen und mit wenigstens einer Doppelbindung handelt.

7. Hochgefüllte Kunststoffzusammensetzung nach einem der vorhergehenden Ansprüche, **dadurch gekennzeichnet, dass** der Anteil des Salzes (b) zwischen 1 und 15 Gew.-% und vorzugsweise zwischen 3 und 7 Gew.-% gemessen an der Gesamtmasse der Zusammensetzung ohne Füllstoff beträgt.

8. Hochgefüllte Kunststoffzusammensetzung nach einem der vorhergehenden Ansprüche, **dadurch gekennzeichnet, dass** die erste Mittlerverbindung (c1) und/oder die zweite Mittlerverbindung (c2) als polare Substituenten Hydroxy- und/oder Amino-Gruppen umfasst, vorzugsweise Hydroxy-Gruppen.

9. Hochgefüllte Kunststoffzusammensetzung nach einem der vorhergehenden Ansprüche, **dadurch gekennzeichnet, dass** der Anteil der ersten Mittlerverbindung (c1) zwischen 5 und 30 Gew.-% und vorzugsweise zwischen 8 und 20 Gew.-% gemessen an der Gesamtmasse der Zusammensetzung ohne Füllstoff beträgt und/oder dass der Anteil der zweiten Mittlerverbindung (c2) zwischen 1 und 20 Gew.-% und vorzugsweise zwischen 2 und 10 Gew.-% gemessen an der Gesamtmasse der Zusammensetzung ohne Füllstoff beträgt.

10. Hochgefüllte Kunststoffzusammensetzung nach einem der vorhergehenden Ansprüche, **dadurch gekennzeichnet, dass** der Anteil der dritten Mittlerverbindung (d) zwischen 3 und 20 Gew.-% und vorzugsweise zwischen 5 und 15 Gew.-% gemessen an der Gesamtmasse der Zusammensetzung ohne Füllstoff beträgt.

11. Verfahren zur Herstellung einer hochgefüllten Kunststoffzusammensetzung nach einem der vorhergehenden Ansprüche, wobei das Verfahren die folgenden Schritte aufweist:
A Suspendieren des Füllstoffes (e) in einem Lösungsmittel;
B Einmischen des Salzes (b), der ersten Mittlerverbindung (c1) und ggf. der zweiten Mittlerverbindung (c2) in die Suspension;
C Trocknen der Suspension zur Entfernung des Lösungsmittels; und
D Vermischen des Rückstandes mit dem Polymer (a); und
E Hinzufügen der dritten Mittlerverbindung (d).

12. Verwendung einer hochgefüllten Kunststoffzusammensetzung nach einem der Ansprüche 1 bis 11 zur Herstellung eines Formteils im Rahmen eines Extrusions- oder Spritzgussverfahrens.

## Claims

1. Highly filled plastic composition comprising:
(a) at least one polyolefin;
(b) at least one metallic salt of an unsaturated aliphatic fatty acid;
(c1) at least one first mediator which is a hydrocarbon compound having at least one cyclic and preferably aromatic group and having at least one polar substituent comprising an oxygen atom and/or nitrogen atom, wherein the first mediator comprises at least two and at most ten cyclic groups per polar substituent, and wherein the melting point of the first mediator is no more than 80°C below and no more than 50°C above the melting point of the polyolefin (a);
(c2) optionally at least one second mediator which is different from the first mediator (c1) and is a hydrocarbon compound having at least one cyclic and preferably aromatic group and having at least one polar substituent comprising an oxygen atom and/or nitrogen atom, wherein the second mediator comprises fewer than two cyclic groups per polar substituent and preferably at least two and at most ten polar substituents per cyclic group, and wherein the melting point of the second mediator is no more than 80°C below and no more than 50°C above the melting point of the polyolefin (a); and
(d) at least one third mediator which is a hydrocarbon compound having at least one cyclic and preferably aromatic group which is unsubstituted or halogen-substituted, wherein the boiling point of the third mediator is no more than 100°C below and no more than 80°C above the melting point of the polyolefin (a); and
(e) at least one particulate filler material;
wherein the proportion of the filler material (e) amounts to more than 40 vol.% measured at the total volume of the filled composition and/or more than 80 vol.% of the theoretical maximum.

2. Highly filled plastic composition in accordance with claim 1, **characterized in that** the melting point of the first mediator (c1) and/or the melting point of the second mediator (c2) is no more than 50°C below and/or no more than 30°C above the melting point of the polyolefin (a); and/or **in that** the boiling point of the third mediator (d) is no more than 70°C below and/or no more than 50°C above the melting point of the polyolefin (a).

3. Highly filled plastic composition in accordance with one of the preceding claims, **characterized in that** the filler material (e) is a metal powder, a metal oxide powder, an oxide ceramic powder, a non-oxide ceramic powder, a carbon powder, or a combination thereof; or **in that** the filler material (e) comprises a metal powder, a metal oxide powder, an oxide ceramic powder, a non-oxide ceramic powder, a carbon powder, or a combination thereof.

4. Highly filled plastic composition in accordance with one of the preceding claims, **characterized in that** the average grain diameter of the filler materials is between 1 µm and 150 µm.

5. Highly filled plastic composition in accordance with one of the preceding claims, **characterized in that** the polyolefin (a) has an average molar mass of between 10⁴ and 10⁶ g/mol; and/or **in that** the melting point of the polyolefin (a) is between 100°C and 250°C.

6. Highly filled plastid composition in accordance with one of the preceding claims, **characterized in that** the fatty acid of the salt (b) is a monovalent carboxylic acid having more than 8 carbon atoms and having at least one double bond.

7. Highly filled plastic composition in accordance with one of the preceding claims, **characterized in that** the portion of the salt (b) amounts to between 1 and 15% by weight, and preferably between 3 and 7% by weight, measured at the total mass of the composition without filler material

8. Highly filled plastic composition in accordance with one of the preceding claims, **characterized in that** the first mediator (c1) and/or the second mediator (c2) comprises/comprise hydroxy groups and/or amino groups, preferably hydroxy groups, as polar substituents.

9. Highly filled plastic composition in accordance with one of the preceding claims, **characterized in that** the proportion of the first mediator (c1) amounts to between 5 and 30% by weight and preferably between 8 and 20% by weight, measured at the total mass of the composition without filler material; and/or **in that** the proportion of the second mediator (c2) amounts to between 1 and 20% by weight and preferably between 2 and 10% by weight, measured at the total mass of the composition without filler material.

10. Highly filled plastic composition in accordance with one of the preceding claims, **characterized in that** the proportion of the third mediator (d) amounts to between 3 and 20% by weight and preferably between 5 and 15% by weight, measured at the total mass of the composition without filler material.

11. Method of producing a highly filled plastic composition in accordance with one of the preceding claims, wherein the method comprises the following steps:
A suspending the filler material (e) in a solvent;
B mixing the salt (b), the first mediator (c1) and optionally the second mediator (c2) into the suspension;
C drying the suspension for removing the solvent; and
D mixing the residue with the polymer (a); and
E adding the third mediator (d).

12. Use of a highly filled plastic composition in accordance with one of the claims 1 to 11 for producing a molded part as part of an extrusion or injection molding process.

## Revendications

1. Composition de matière plastique hautement chargée, comprenant :
(a) au moins une polyoléfine ;
(b) au moins un sel métallique d'un acide gras aliphatique insaturé ;
(c1) au moins un premier composé médiateur, où il s'agit d'un composé hydrocarboné avec au moins un groupe cyclique et de préférence aromatique et avec au moins un substituant polaire comprenant un atome d'oxygène et/ou d'azote, dans laquelle le premier composé médiateur comprend au moins deux et au maximum dix groupes cycliques par substituant polaire, et dans laquelle le point de fusion du premier composé médiateur n'est pas inférieur de plus de 80 °C et n'est pas supérieur de plus de 50 °C au point de fusion de la polyoléfine (a) ;
(c2) en option au moins un deuxième composé médiateur, qui est différent du premier composé médiateur (c1) et où il s'agit d'un composé hydrocarboné avec au moins un groupe cyclique et de préférence aromatique et avec au moins un substituant polaire comprenant un atome d'oxygène et/ou d'azote, dans laquelle le deuxième composé médiateur comprend moins de deux groupes cycliques par substituant polaire et de préférence au moins deux et au maximum dix substituants polaires par groupe cyclique, et dans laquelle le point de fusion du deuxième composé médiateur n'est pas inférieur de plus de 80 °C et n'est pas supérieur de plus de 50 °C au point de fusion de la polyoléfine (a) ; et
(d) au moins un troisième composé médiateur, où il s'agit d'un composé hydrocarboné avec au moins un groupe cyclique et de préférence aromatique, qui n'est pas substitué ou est substitué par un halogène, dans laquelle le point d'ébullition du troisième composé médiateur n'est pas inférieur de plus de 100 °C et n'est pas supérieur de plus de 80 C au point de fusion de la polyoléfine (a) ; et
(e) au moins une charge particulaire,
dans laquelle la fraction de la charge (e) est supérieure à 40 % en vol. selon une mesure sur le volume total de la composition remplie et/ou est supérieure à 80 % en vol. du maximum théorique.

2. Composition de matière plastique hautement chargée selon la revendication 1, **caractérisée en ce que** le point de fusion du premier composé médiateur (c1) est/ou le point de fusion du deuxième composé médiateur (c2) ne sont pas inférieurs de plus de 50 °C et/ou supérieurs de plus de 30 °C au point de fusion de la polyoléfine (a) ; et/ou que le point d'ébullition du troisième composé médiateur (d) n'est pas inférieur de plus de 70 °C et/ou n'est pas supérieur de plus de 50 °C au point de fusion de la polyoléfine (a).

3. Composition en matière plastique hautement chargée selon l'une quelconque des revendications précédentes, **caractérisée en ce que** la charge (e) est une poudre de métal, une poudre d'oxyde métallique, une poudre de céramique oxydée, une poudre de céramique non oxydée, une poudre de carbone ou une combinaison de celles-ci ou que la charge (e) comprend une poudre de métal, une poudre d'oxyde métallique, une poudre de céramique oxydée, une poudre de céramique non oxydée, une poudre de carbone ou une combinaison de celles-ci.

4. Composition de matière plastique hautement chargée selon l'une quelconque des revendications précédentes, **caractérisée en ce que** le diamètre de grain moyen des charges se situe entre 1 µm et 150 µm.

5. Composition de matière plastique hautement chargée selon l'une quelconque des revendications précédentes, **caractérisée en ce que** la polyoléfine (a) présente une masse molaire moyenne entre 10⁴ et 10⁶ g/mol, et/ou que le point de fusion de la polyoléfine (a) est compris entre 100 °C et 250 °C

6. Composition de matière plastique hautement chargée selon l'une quelconque des revendications précédentes, **caractérisée en ce que** l'acide gras du sel (b) est un acide carboxylique monovalent avec plus de 8 atomes de carbone et avec au moins une liaison double.

7. Composition de matière plastique hautement chargée selon l'une quelconque des revendications précédentes, **caractérisée en ce que** la fraction du sel (b) est comprise entre 1 et 15 % en poids et de préférence entre 3 et 7 % en poids selon une mesure sur l'ensemble de la masse de la composition sans charge.

8. Composition de matière plastique hautement chargée selon l'une quelconque des revendications précédentes, **caractérisée en ce que** le premier composé médiateur (c1) et/ou le deuxième composé médiateur (c2) comprennent en tant que substituants polaires des groupes hydroxy et/ou amino, de préférence des groupes hydroxy.

9. Composition de matière plastique hautement chargée selon l'une quelconque des revendications précédentes, **caractérisée en ce que** la fraction du premier composé médiateur (c1) est comprise entre 5 et 30 % en poids et de préférence entre 8 et 20 % en poids selon une mesure sur l'ensemble de la masse de la composition sans charge, et/ou que la fraction du deuxième composé médiateur (c2) est comprise entre 1 et 20 % en poids et de préférence entre 2 et 10 % en poids selon une mesure de la totalité de la masse de la composition sans charge.

10. Composition de matière plastique hautement chargée selon l'une quelconque des revendications précédentes, **caractérisée en ce que** la fraction du troisième composé médiateur (d) est comprise entre 3 et 20 % en poids et de préférence entre 5 et 15 % en poids selon une mesure de la totalité de la masse de la composition sans charge.

11. Procédé servant à fabriquer une composition de matière plastique hautement chargée selon l'une quelconque des revendications précédentes, dans lequel le procédé présente les étapes suivantes :
A. la suspension de la charge (e) dans un solvant ;
B. le mélange du sel (b), du premier composé médiateur (c1) et éventuellement du deuxième composé médiateur (c2) dans la suspension ;
C. le séchage de la suspension pour supprimer le solvant ; et
D. le mélange du résidu au polymère (a) ; et
E. l'ajout du troisième composé médiateur (d).

12. Utilisation d'une composition de matière plastique hautement chargée selon l'une quelconque des revendications 1 à 11 servant à fabriquer une pièce moulée dans le cadre d'un procédé d'extrusion ou de moulage par injection.
